## Europäisches Patentamt

## European Patent Office

## Office européen des brevets

(11) Veröffentlichungsnummer: **0 012 167**
A1

# EUROPÄISCHE PATENTANMELDUNG

(21) Anmeldenummer: **79103881.3**

(22) Anmeldetag: **10.10.79**

(51) Int. Cl.³: **B 29 D 23/12**, B 29 D 3/02, F 16 L 9/16, F 16 L 9/12, B 29 D 7/18

(30) Priorität: **11.12.78 DE 2853417**

(43) Veröffentlichungstag der Anmeldung: **25.06.80** **Patentblatt 80/13**

(84) Benannte Vertragsstaaten: **AT BE CH DE FR GB IT LU NL SE**

(71) Anmelder: **Deutsche Carbone AG, Talstrasse 112 Postfach 56 02 09, D-6000 Frankfurt am Main 56 (DE)**

(72) Erfinder: **Pott, Richard, Tannenbergstrasse 33, D-4937 Lage/Lippe (DE)**

(74) Vertreter: **Gudel, Diether et al, Grosse Eschenheimer Strasse 39, D-6000 Frankfurt/Main (DE)**

(54) **Verfahren zur Herstellung eines Formkörpers aus Verbundmaterial und nach diesem Verfahren hergestellter Formkörper.**

(57) Gemäß des Verfahrens werden auf eine positive Form (10) eine mit Kunstharz getränkte innere Stützschicht (4), auf diese wiederum eine ebenfalls mit Kunstharz getränkte Mittelschicht (6) aus unidirektionalem, anisotropen Fasermaterial und auf diese wiederum eine mit Kunstharz getränkte äußere Stützschicht (7) aufgebracht, die nach der Aushärtung des Kunstharzes den Formkörper ergeben.

EP 0 012 167 A1

Verfahren zur Herstellung eines Formkörpers aus
Verbundmaterial und nach diesem Verfahren hergestellter Formkörper

Die Erfindung betrifft ein Verfahren zur Herstellung
eines Formkörpers aus Verbundmaterial, wobei auf
eine positive Form eine mit Kunstharz getränkte
innere Stützschicht, auf diese wiederum eine
ebenfalls mit Kunstharz getränkte Mittelschicht
aus unidirektionalem, anisotropem Fasermaterial,
vorzugsweise aus Kohlenstoff, und auf diese wiederum
eine mit Kunstharz getränkte äußere Stützschicht
aufgebracht wird, die nach der Aushärtung des Kunstharzes den Formkörper ergeben, wobei ferner die
Fasern der Mittelschicht zumindest teilweise im
wesentlichen in Richtung der Beanspruchung des
Formkörpers verlaufen.

Ein derartiges Verfahren zur Herstellung eines
verstärkten Rohres ist durch die FR-PS 2 310 517
bekannt geworden. Die beiden Stützschichten bestehen dort aus Glasfasergewebe. Die Mittelschicht
besteht aus einem Gewebe aus Kohlenstoffasern.
Die innere Stützschicht und die Mittelschicht sind
mit Kunstharz imprägniert. Die äußere Stützschicht
ist nicht imprägniert. Über der äußeren Stützschicht befindet sich eine Schutzschicht. Das
Rohr wird dadurch hergestellt, daß die entsprechenden Gewebe auf einen Dorn aufgewickelt werden. Dieses
Verfahren ist somit auf die Herstellung rotationssymmetrischer Formkörper beschränkt. Noch stärker
fällt ins Gewicht, daß die Länge des jeweils her-

2

gestellten Formkörpers auf die Länge der jeweils verwendeten Gewebebahnen begrenzt ist. Fernerhin ergibt sich eine nur ungenügende Verbindung zwischen der imprägnierten Mittelschicht und der äußeren, nicht imprägnierten Stützschicht.

Ein Verfahren zur kontinuierlichen Herstellung eines verstärkten Rohres aus mit Kunstharz getränkten, endlosen Fasern beschreibt die US-PS 3 068 134. Dort werden die Fasern in mehreren Stufen in axialer Richtung hintereinander spiralförmig auf einen Dorn beziehungsweise auf die vorhergehenden Fasern aufgewickelt. Nach diesem Verfahren lassen sich zwar endlose Rohre herstellen, nicht jedoch beliebig geformte Körper. Noch stärker fällt ins Gewicht, daß dort der apparative Aufwand zur Durchführung des Verfahrens sehr hoch ist.

Die DE-OS 1 704 925 beschreibt ein Verfahren zur Herstellung eines verstärkten Kunststoffrohres, wobei - ähnlich wie bei dem an erster Stelle erläuterten vorbekannten Verfahren - ein Glasfasergewebe auf einen Dorn aufgewickelt wird. Darüber werden weitere Schichten gewickelt. Zwar ergibt sich hier eine gute, homogene Verbindung der einzelnen Gewebelagen, bedingt durch das Aufwickeln "naß-in-naß", jedoch ist auch hier wiederum die Länge des jeweils hergestellten Formkörpers begrenzt, und zwar bedingt durch die Länge der jeweils verwendeten Gewebebahnen. Nach diesem Verfahren lassen sich außerdem nur Rohre oder ähnlich einfach gestaltete Formkörper der Art herstellen, daß zumindest die Fasern einer Lage im wesentlichen in Richtung der Beanspruchung des fertigen Formkörpers verlaufen. Bei komplizierteren Formen ist dies dort nicht möglich, weil die Fasern der Bahnen dort vorzugsweise nur in axialer oder in radialer Richtung des Rohres ausgerichtet sind. Auch werden dort keine in Längsrichtung hoch belastbare Fasern verwendet.

Eine ähnliche Kritik trifft auf das durch die BE-PS 536 720 vorbekannte Verfahren zu, wo Bänder spiralförmig auf einen Dorn aufgewickelt werden, gegebenenfalls mit einer Zwischenlage, die sich in axialer Richtung des Dornes erstreckt.

Die US-PS 2 899 982 beschreibt ein Verfahren zur Herstellung eines biegsamen Schlauches, wobei schlauchartige Gewebe mit einer Zwischenlage auf einen Grundschlauch aufgezogen werden. Die Gewebe werden aber nicht mit Kunstharz getränkt, weil sonst der hergestellte Schlauch nicht biegsam sein würde.

Die DE-OS 2 065 706 beschreibt die Herstellung eines faserverstärkten Kunststoffrohres, wobei in axialer Richtung hintereinander endlose Fäden auf einem Mantel abgelegt werden. Dieses Verfahren ist wiederum apparativ sehr aufwendig.

Die GB-PS 1 074 189 beschreibt die Herstellung eines verstärkten Rohres, wobei auf einen rohrförmig aufgeblasenen Film von außen zwei mit Kunstharz getränkte Gewebeschichten aufgelegt werden. Auch dieses Verfahren ist wiederum apparativ recht aufwendig und gestattet nur die Herstellung von Rohren oder dergleichen Formkörpern.

Zur Herstellung eines armierten Schlauches ist es aus der GB-PS 1 027 950 bekannt, ein Metallrohr über ein spiralförmig armiertes Rohr zu schieben und über das äußere Rohr wiederum einen gewirkten Strumpf zu schieben, dessen Fasern mit einem elastomeren Material beschichtet sind. Anschließend wird das so hergestellte Gebilde unter Anlegung von Unterdruck mit einem Plastikschlauch umschlossen. Der so vorgefertigte Schlauch wird dann erwärmt, so daß das elastomere Material den gewirkten Strumpf mit dem Metallrohr verbindet. Diese Verbindung reicht aber für hoch beanspruchte Bauteile nicht aus, insbesondere weil ein Elastomer unter Einwirkung von Wärme mit einer glatten Metalloberfläche verbunden werden soll.

Die US-PS 1 437 365 beschreibt die Herstellung eines kompliziert geformten Körpers durch Anlegen von Schablonen an die Außenflächen eines Blocks aus schneidbarem Kunststoffmaterial, worauf durch erhitzte Drähte oder dergleichen der betreffende Formkörper aus dem Block ausgeschnitten wird. Ein ähnliches Verfahren beschreibt im übrigen die US-PS 3 757 617.

Ausgehend von einem Verfahren der eingangs genannten Art liegt der Erfindung die Aufgabe zugrunde, dieses so weiterzubilden, daß mit wenig apparativem Aufwand hoch belastbare Formkörper in Leichtbauweise hergestellt werden können.

Zur Lösung dieser Aufgabe ist die Erfindung dadurch gekennzeichnet, daß die innere Stützschicht aus vorgefertigtem, gewirktem oder gestricktem Schlauchmaterial auf den Formkörper aufgezogen wird, worauf

5

die Mittelschicht auf die innere Stützschicht und
darauf die äußere Stützschicht naß-in-naß aufgebracht werden.

Es ergibt sich somit eine innige Verbindung der
drei Schichten, wobei durch die Verwendung des
Schlauchmaterials auch sehr unregelmäßig geformte
Formkörper nach dem Verfahren hergestellt werden
können, weil das Schlauchmaterial in sich elastisch
dehnbar ist. Die dadurch hergestellte innere Stützschicht  stützt bei den nachfolgenden Verfahrenschritten die Mittelschicht und diese wiederum
die äußere Stützschicht. Die Mittelschicht besteht aus besonders zugfesten Fasern, so daß
diese wegen der beschriebenen Maßnahmen vorzugsweise in der Richtung angebracht werden können,
in der der fertige Formkörper später den größten
Belastungen ausgesetzt wird. Die äußere Stützschicht dient auch als Schutzschicht.

Für das Aufbringen der äußeren Stützschicht gibt
es mehrere Möglichkeiten. Eine erste Möglichkeit
ist dadurch gekennzeichnet, daß auch die äußere
Stützschicht aus vorgefertigtem, gewirktem oder
gestricktem Schlauchmaterial auf die Mittelschicht
aufgezogen wird. Dieses Verfahren kann mit sehr
geringem apparativen Aufwand durchgeführt werden,
wobei sich die äußere Stützschicht aus den erwähnten Gründen wiederum in weiten Bereichen den
jeweils vorhandenen Formen anpaßt.

Ein anderes Verfahren ist dadurch gekennzeichnet,
daß die äußere Stützschicht als Band spiralig
auf die Mittelschicht aufgewickelt wird.

6

In allen Fällen läßt sich das neuartige Verfahren auch für die Herstellung von Formkörpern in geringen Stückzahlen vorteilhaft verwenden.

Um den zueinander parallel verlaufenden Fasern der Mittelschicht die notwendige Verbindung miteinander zu geben, ohne daß dabei zu viele Fasern in einer Richtung verlegt werden, in der sie beim fertigen Formkörper für die Zug- bezeihungsweise Biegungsbeanspruchung nicht in dem Maße benötigt werden, wird es bevorzugt, wenn die Mittelschicht als Faserbahn ausgebildet ist, deren parallele Fasern unter Abständen in Querrichtung der Fasern miteinander verbunden sind.

Diese Verbindung erfolgt vorzugsweise durch Verschweißen oder durch Kettfäden.

Bei stärker belasteten Formkörpern kann die Mittelschicht aus mehreren Lagen bestehen.

Für eine preisgünstige Herstellung der positiven Form, die auch in geringen Stückzahlen vorteilhaft durchgeführt werden kann, wird es bevorzugt, wenn die positive Form aus einem Block aus Kunststoffhartschaum hergestellt wird, in dem ein beheizter Draht längs Schablonen geführt wird, die an den Stirnseiten des Blocks befestigt sind und der dabei die Form aus dem Block herausschneidet.

Bei manchen Anwendungsfällen wird eine Zwischenhärtung der Art bevorzugt, daß nach dem Aufziehen der inneren Stützschicht auf den Formkörper und vor dem Aufbringen der Mittelschicht auf die innere Stützschicht das Kunstharz der inneren Stützschicht gehärtet wird. Dadurch erlangt die innere Stützschicht bereits die Festigkeit, die für ein formstabiles Aufziehen der Mittelschicht und für die weiteren Verfahrenschritte notwendig ist. Diese Verfahrenschritte empfehlen sich insbesondere dann, wenn eine wenig stabile positive Form verwendet wird.

Die Erfindung wird im folgenden anhand von Ausführungsbeispielen näher erläutert. Es zeigt:

Figur 1 bis 5 verschiedene Arbeitsschritte zur Herstellung eines Formkörpers;

Figur 6 perspektivisch den nach dem Verfahren nach Figur 1 bis 5 hergestellten, fertigen Formkörper;

Figur 7 eine andere Ausführungsform eines Verfahrens zum Anbringen der äußeren Stützschicht;

Figur 8 ein Ausführungsbeispiel eines aus zwei Teilen zusammengesetzten Formkörpers;

Figur 9 perspektivisch eine Gewebebahn zur Herstellung der Mittelschicht.

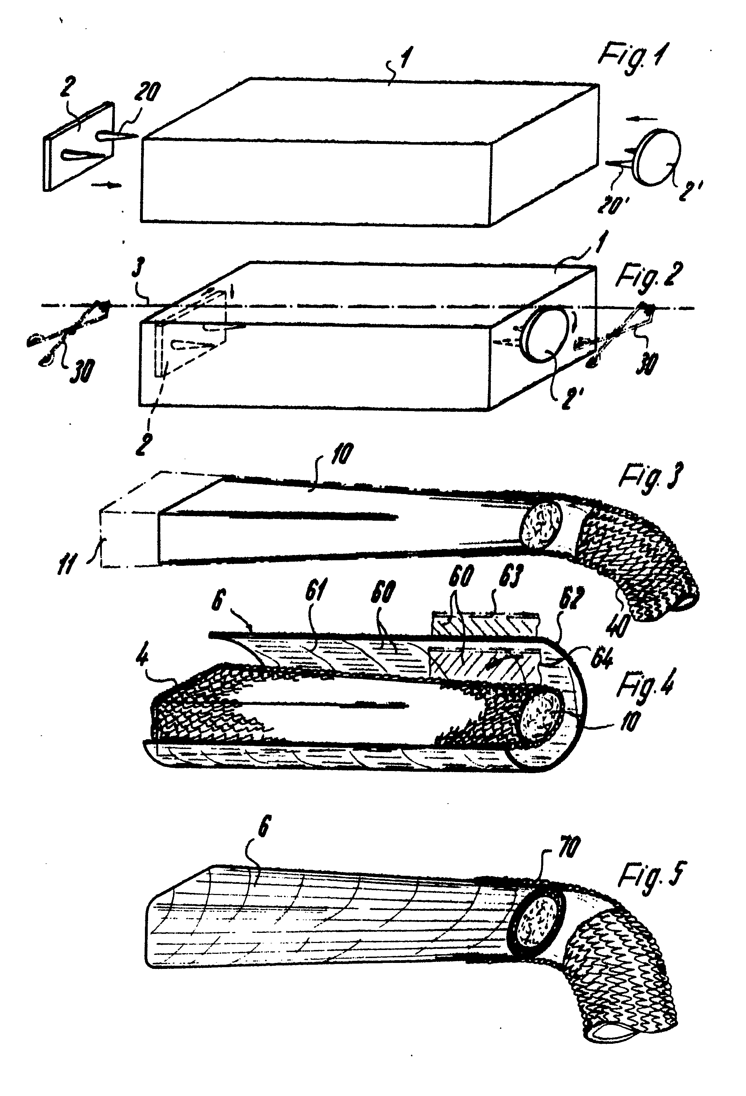

In den Fig. 1 bis 5 sind die verschiedenen Arbeitsschritte bei einem Ausführungsbeispiel für die Herstellung eines Formkörpers gezeigt.

Zunächst wird eine der Form des Formkörpers entsprechende positive Form hergestellt. Hierzu wird ein Block 1 aus Kunststoffhartschaum, beispielsweise Polystyrol-Hartschaum oder dergleichen an seinen beiden Enden mit Schablonen 2 und 2' versehen, die vorzugsweise Stifte 20, 20' tragen, die ihrerseits in das Schablonenmaterial eingedrückt werden. Dies kann von Hand oder maschinell geschehen. Anschließend wird

0012167

ein erhitzter Draht 3 gemäß der Darstellung Fig. 2 um die Außenkante der Schablonen 2 und 2' herumgeführt, beispielsweise durch Zangen 30, wodurch sich eine Positivform 10 ergibt, die zur Herstellung eines Formkörpers 5 dient. Über die Positivform kann dann eine Folie 11, die in Fig. 3 strichpunktiert angedeutet ist, gezogen werden, oder es wird ein Trennmittel aufgetragen, das für Mehrkomponenten-Kunstharz wirksam ist. Sowohl die Folie 11 als auch das Trennmittel können fortgelassen werden, wenn ein Formkörper hergestellt werden soll, in dem die Positivform verbleibt und nicht ein Hohlkörper, aus dem die Positivform herausgezogen werden soll.

Über die gegebenenfalls in dieser Form vorpräparierte Positivform 10 mit oder ohne Folie 11 oder Trennmittel wird bei dem dargestellten Ausführungsbeispiel der Fig. 1 bis 5 ein gewirkter oder gestrickter Strumpf 40 gezogen, bestehend aus Glasfasermaterial, wobei sich der Strumpf 40 sehr gut der Positivform anpaßt. Der Strumpf 40 bildet eine innere Stützschicht 4 aus und kann auch aus Aramidfasermaterial bestehen. Nach Aufbringen auf die Positivform wird der Strumpf mit Mehrkomponenten-Kunstharz durchtränkt. Das Kunstharz wird vorzugsweise zunächst getrocknet, gegebenenfalls auch unter Wärmeeinwirkung aus- oder nachgetempert, wodurch die Trocknungszeit verkürzt wird. Jetzt ist bereits ein selbsttragendes Gebilde vorhanden und man kann bereits die Positivform 10 entfernen. Im allgemeinen wird sie aber bei den weiteren Arbeitsgängen im Inneren des herzustellenden Gebildes belassen.

Über die Stützschicht 4 wird nun eine Mittelschicht 6 gearbeitet, die aus unidirektionalem, anisotropem Fasermaterial besteht. Dieses Material kann ein-

Kohlenstoffaser sein, eine Aramidfaser, eine Glasfaser oder eine Borfaser beziehungsweise Kombinationen der angegebenen Fasern. Sämtliche Materialien sind vorzugsweise anisotrop und vor allem unidirektional angeordnet. Die Fasern 60 der Mittelschicht 6 können durch Schweißlinien 61 miteinander verbunden sein, so daß ein leicht zu handhabendes Gebilde ähnlich eines Gewebes vorliegt. Die Mittelschicht 6 wird derart aufgebracht, daß die Fasern 60 in etwa parallel zur Mittelachse verlaufen. Wird die Mittelschicht aus mehreren Lagen aufgebaut, und zwar aus Oberlage, Mittellage, Unterlage, so sollte eine der Lagen parallel zur Mittelachse des zu bildenden Gegenstandes liegen und die anderen Lagen können im Winkel zur Mittelachse gelegt werden. Dies ist in Fig. 4 angedeutet. Die Mittellage ist mit 62, die Oberlage mit 63 und die Unterlagen mit 64 in Fig. 4 bezeichnet. Im allgemeinen genügt eine Lage.

Anschließend wird eine äußere Stützschicht 7 durch Aufziehen eines Strumpfgebildes 70 aufgebracht. Dieses kann wieder gewirkt oder gestrickt sein beziehungsweise auf andere Art und Weise hergestellt sein, wie es später beschrieben wird. Vor dem Aufziehen des Strumpfgebildes 70 wird die Mittelschicht mit einem Mehrkomponenten-Kunstharz durchtränkt und auch das Strumpfgebilde 70 wird durchtränkt, so daß ein Naß-in-Naß-Verfahren durchgeführt wird. Beide Schichten verbinden sich damit innig, und zwar homogen, wobei, wenn alle drei Schichten naß-in-naß übereinandergebracht werden und gemeinsam mit oder ohne Aus- oder Nachtempern getrocknet werden, alle drei Schichten in einer homogenen Verbindung stehen. Durch die Anordnung der gewirkten oder gestrickten Gebilde 40

10

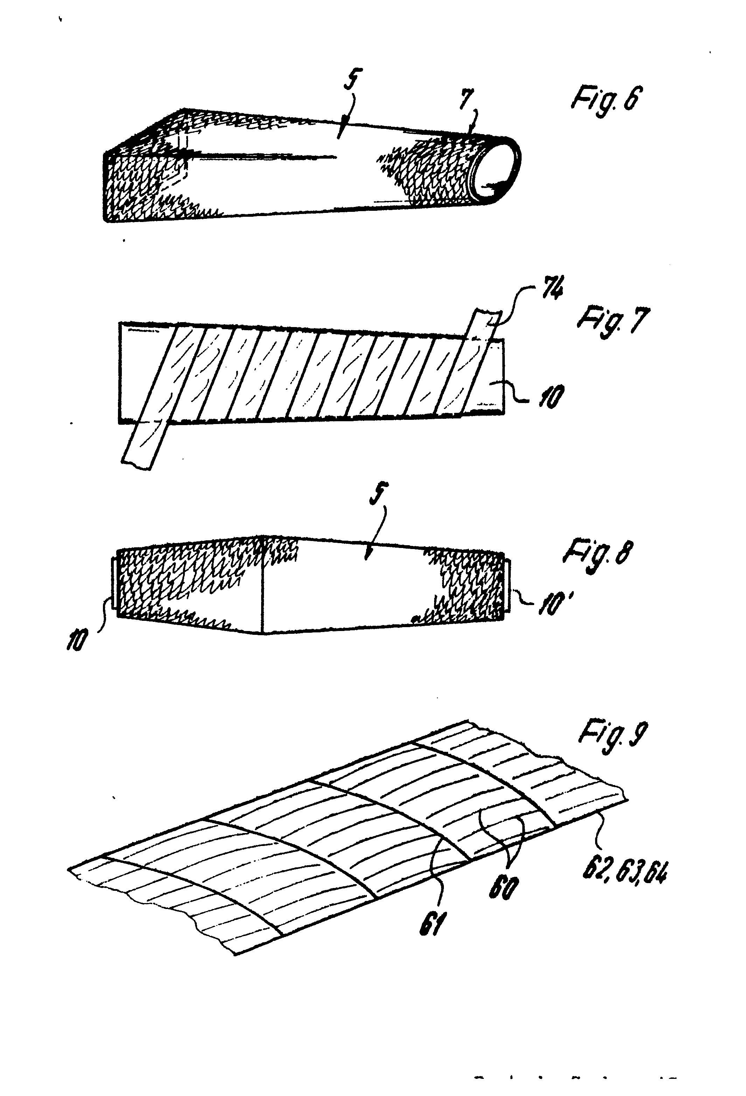

und 70 jeweils für die Stützschichten wird erreicht, daß die Schichten sich ineinander verzahnen und gleichzeitig der gesamte Formkörper 5 ein griffiges Gebilde wird, was den Vorteil hat, daß Anbauteile leicht ihre Verankerung finden. In Fig. 6 ist der Formkörper 5 dargestellt, und zwar als Hohlkörper, da die Positivform entfernt ist.

Wie aus Fig. 7 ersichtlich, ist die Aufbringung der Stützschichten auf andere Art und Weise möglich als durch Überziehung mit einem Strumpf. Hier ist gezeigt, daß ein beispielsweise aus Glasfasern bestehendes gewebtes Band 74 auf die Positivform 10 oder auf die Mittelschicht aufgewickelt wird. Statt eines Bandes können auch Fäden dicht an dicht aufgewickelt werden.

Fig. 8 zeigt, daß beim Zusammenfügen zweier Positivformen 10 und 10', beispielsweise auch durch Klebung, Formkörper entstehen, die durch zwei Arbeitsverfahren gemäß der Fig. 2 hergestellt worden sind, wodurch sich die Formgestaltungsmöglichkeit erweitert.

Es besteht aber auch die Möglichkeit, Rohre, Glasbehälter usw. durch ein oder mehrere Schichten 4 und/oder 7 und eine Mittelschicht 6 zu umkleiden, um einen Formkörper beliebiger Formgebung zu erhalten.

Die Positivform kann durch Herausdrücken, Herauslösen mittels Lösungsmittel und gegebenenfalls, wenn über ein Glas gewickelt wurde, durch Herausschlagen entfernt werden, die Form 10 kann aber auch im Formkörper verbleiben und diesen ganz oder teilweise ausfüllen.

11

Als kalthärtendes Zweikomponentenharz zur Kunstharzdurchtränkung kann vorzugsweise ein Harz auf der Basis von z.B. Epoxydharzbasis, Acrylharzbasis, Polyesterharzbasis oder Polyimidharzbasis verwendet werden.

Eine der Stützschichten hat einen geringeren Elastizitätsmodul als die Mittelschicht, die aus unidirektionalem, anisotropen Fasermaterial besteht, das seine Fasern parallel oder in etwa parallel zur Längsachse des Formkörpers hat. Unter Kohlenstoffasern werden insbesondere Verstärkungsfasern verstanden, die z.B. aus durch gesteuerte Pyrolyse unter mechanischer Zugspannung gehaltenen Acrylfasern hergestellt werden, die einer Wärmebehandlung von ca. 1200° C unterlegen sind. Unter Graphitfasern werden beispielsweise Fasern des gleichen Types verstanden, die einer Wärmebehandlung von ca. 2800° C unterlegen sind und die gegebenenfalls außerdem einer physikalisch-chemischen Oberflächenbehandlung unterworfen wurden, die dazu bestimmt ist, die Scherfestigkeit der so erhaltenen Werkstoffe zu erhöhen.

Bei diesen Werkstoffen liegen die Fasern parallel zueinander; die Fasern sind nicht miteinander verbunden beziehungsweise nur punktuell miteinander verbunden. Alle Fasern haben vorzugsweise dieselbe Größe und dieselben Eigenschaften. Der Wärmeausdehnungskoeffizient der Kohlenstoffasern in Längsrichtung ist praktisch Null für Temperaturen zwischen minus 50° C und 200° C.

Im Vorhergehenden ist darüber gesprochen, daß die Kohlenstoffasern und demzufolge auch genauso die Graphitfasern und ähnliche Fasern miteinander durch Verschweißung verbunden sind. Diese Schweißlinien 61 sind auch ersetzbar durch Schußfäden mit größeren Abständen voneinander.

Weiterhin besteht die Möglichkeit, die unidirektionalen, anisotropen Fasermaterialien durch Faserstränge zu bilden, die durch Verharzung miteinander verbunden sind, wobei dann solche Faserstränge als Prepregs bezeichnet werden.

Die Ausbildung der Mittelschicht aus mehreren Lagen kann insbesondere für hochbeanspruchte Rohre oder Pfähle, beispielsweise für Segelmasten Verwendung finden, bei denen die Biegungsabweichungen vorbestimmt sind. In diesem Fall wird in Längsrichtung des Mastes oder Rohres das Material als Mittelschicht angeordnet werden, wie es Fig. 4 zeigt, und darauf eine Lage der Mittelschicht der Art gewickelt, wie es in Fig. 7 bei einer Stützschicht gezeigt ist.

Bei sämtlichen Schichten handelt es sich im wesentlichen um die Verwendung von gewebeähnlichem Material. Auch die Kohlenstoffasern, wenn sie miteinander durch eine Schweißlinie verbunden sind oder durch quer gewebte Schußfäden, bilden ein derartiges Material. Dieses flächenhafte Material läßt sich gut verarbeiten und verleiht dem Endprodukt gute Festigkeit und Stabilität.

Patentansprüche

1. Verfahren zur Herstellung eines Formkörpers aus Verbundmaterial, wobei auf eine positive Form eine mit Kunstharz getränkte innere Stützschicht, auf diese wiederum eine ebenfalls mit Kunstharz getränkte Mittelschicht aus unidirektionalem, anisotropen Fasermaterial, vorzugsweise aus Kohlenstoff, und auf diese wiederum eine mit Kunstharz getränkte äußere Stützschicht aufgebracht wird, die nach der Aushärtung des Kunstharzes den Formkörper ergeben, wobei ferner die Fasern der Mittelschicht zumindest teilweise im wesentlichen in Richtung der Beanspruchung des Formkörpers verlaufen, d a d u r c h   g e k e n n z e i c h n e t , daß die innere Stützschicht (4) aus vorgefertigtem, gewirktem oder gestricktem Schlauchmaterial (40) auf den Formkörper (5) aufgezogen wird, worauf die Mittelschicht (6) auf die innere Stützschicht und darauf die äußere Stützschicht (7) naß in naß aufgebracht werden.

2. Verfahren nach Anspruch 1, d a d u r c h   g e k e n n z e i c h n e t , daß auch die äußere Stützschicht (7) aus vorgefertigtem, gewirktem oder gestricktem Schlauchmaterial (70) auf die Mittelschicht (6) aufgezogen wird.

3. Verfahren nach Anspruch 1, d a d u r c h   g e k e n n z e i c h n e t , daß die äußere Stützschicht (7) als Band (74) spiralig auf die Mittelschicht (6) aufgewickelt wird.

14

4. Verfahren nach einem der Ansprüche 1 bis 3,
d a d u r c h   g e k e n n z e i c h n e t ,
daß die Mittelschicht (6) als Faserbahn (60)
ausgebildet ist, deren parallele Fasern unter
Abständen in Querrichtung der Fasern miteinander verbunden sind.

5. Verfahren nach Anspruch 4,
d a d u r c h   g e k e n n z e i c h n e t ,
daß die Verbindung (61) durch Verschweißen oder
durch Kettfäden erfolgt.

6. Verfahren nach einem der Ansprüche 1 bis 5,
d a d u r c h   g e k e n n z e i c h n e t ,
daß die Mittelschicht (6) aus mehreren Lagen
(60, 62) besteht.

7. Verfahren nach einem der Ansprüche 1 bis 6,
d a d u r c h   g e k e n n z e i c h n e t ,
daß die positive Form aus einem Block (1) aus
Kunststoffhartschaum hergestellt wird, indem
ein beheizter Draht (3) längs Schablonen (2, 2')
geführt wird, die an den Stirnseiten des Blocks
befestigt sind und der dabei die Form aus dem
Block herausschneidet.

8. Verfahren nach einem der Ansprüche 1 bis 7,
d a d u r c h   g e k e n n z e i c h n e t ,
daß nach dem Aufziehen der inneren Stützschicht (4)
auf den Formkörper (1) und vor dem Aufbringen der
Mittelschicht (6) auf die innere Stützschicht das
Kunstharz der inneren Stützschicht (4) gehärtet
wird.

9. Formkörper, hergestellt nach dem Verfahren nach einem der vorhergehenden Ansprüche.

112

0012167

Fig. 1

Fig. 2

Fig. 3

Fig. 4

Fig. 5

Fig. 6

Fig. 7

Fig. 8

Fig. 9

# EUROPÄISCHER RECHERCHENBERICHT

00.12167

Nummer der Anmeldung

EP 79 10 3881

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| D | <u>DE - A - 2 065 706</u> (BAYER)<br><br>\* Seite 4, Zeilen 6-19; Seite 5, Zeilen 5-8; Seite 6, Zeilen 12-20; Figuren \*<br><br>-- | 1,2,6, 8 |
| D | <u>US - A - 2 899 982</u> (D.E. HARPFER)<br><br>\* Spalte 3, Zeilen 3-27; Figuren \*<br><br>-- | 1,2 |
| D | <u>FR - A - 2 310 517</u> (MESSERSCHMIT-BÖLKOW-BLOHM)<br><br>\* Seite 2, Zeilen 10-29; Seite 3, Zeilen 13-31; Figuren \*<br><br>-- | 1 |
| D | <u>US - A - 3 068 134</u> (W.H. CILKER)<br><br>\* Spalte 1, Zeilen 38-70; Spalte 3, Zeile 70 bis Spalte 4, Zeile 6 \*<br><br>-- | 3 |
| D | <u>DE - A - 1 704 925</u> (LA PLAST AMSTALT)<br><br>\* Seite 2 bis Seite 4, Zeile 23; Seite 5, Zeile 19 bis Seite 6, Zeile 24; Figuren \*<br><br>-- | 4,5 |
| D | <u>GB - A - 1 027 950</u> (DAYCO CORP.)<br><br>\* Seite 1, Zeilen 55-61; Seite 2, Zeile 44 bis Seite 3; Figuren \*<br><br>-- | 1 |
| A | <u>GB - A - 908 127</u> (COLUMBIA PROD.)<br><br>./. | |

### KLASSIFIKATION DER ANMELDUNG (Int.Cl. 3)

B 29 D 23/12
3/02
F 16 L 9/16
9/12
B 29 D 7/18

### RECHERCHIERTE SACHGEBIETE (Int. Cl. 3)

B 29 D 3/02
23/12
F 16 L 9/12
9/14
9/16

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 17-03-1980 | VAN BELLEGHEM |

EPA form 1503.1 06.78

| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| A | GB - A - 709 251 (CARL DE GANAHL) | | |
| A | US - A - 2 723 705 (H.W. COLLINS) | | |
| A | FR - A - 1 412 387 (MME DE VINZELLES) | | |
| AD | BE - A - 536 720 (A. LEZIER) | | |
| A | GB - A - 1 231 091 (GOLDSWORTHY ENG.) | | |
| | ---- | | RECHERCHIERTE SACHGEBIETE (Int. Cl. 3) |

EPA Form 1503.2   06.78